(19) **Europäisches Patentamt / European Patent Office / Office européen des brevets**

(11) **EP 4 414 464 A1**

(12) **EUROPEAN PATENT APPLICATION**
published in accordance with Art. 153(4) EPC

(43) Date of publication:
**14.08.2024  Bulletin 2024/33**

(21) Application number: **22881121.2**

(22) Date of filing: **14.10.2022**

(51) International Patent Classification (IPC):
**C21D 8/12** (2006.01)      **C22C 38/00** (2006.01)
**C22C 38/60** (2006.01)      **H01F 1/147** (2006.01)

(52) Cooperative Patent Classification (CPC):
**C21D 8/12; H01F 1/147; C22C 38/00; C22C 38/60**

(86) International application number:
**PCT/JP2022/038469**

(87) International publication number:
**WO 2023/063426 (20.04.2023 Gazette 2023/16)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority:  **15.10.2021   JP 2021169766**

(71) Applicant: **JFE Steel Corporation
Tokyo 100-0011 (JP)**

(72) Inventors:
• **SERA, Ayaka
Tokyo 1000011 (JP)**
• **SHINGAKI, Yukihiro
Tokyo 1000011 (JP)**

(74) Representative: **Grünecker Patent- und
Rechtsanwälte
PartG mbB
Leopoldstraße 4
80802 München (DE)**

(54) **AGING TREATMENT METHOD AND ORIENTED ELECTROMAGNETIC STEEL SHEET MANUFACTURING METHOD**

(57)    Provided is a grain-oriented electrical steel sheet having excellent magnetic properties. In an aging treatment method of subjecting a steel sheet before final cold rolling to aging treatment in a process of producing a grain-oriented electrical steel sheet, a total aging amount of carbon during a period from completion of cooling in annealing before the final cold rolling to biting in the final cold rolling is 0.02 $\mu$m to 0.5 $\mu$m in terms of diffusion distance of carbon.

EP 4 414 464 A1

**Description**

TECHNICAL FIELD

The present disclosure relates to an aging treatment method of subjecting a steel sheet before final cold rolling to aging treatment in a process of producing a grain-oriented electrical steel sheet, and a method of producing a grain-oriented electrical steel sheet.

BACKGROUND

Grain-oriented electrical steel sheets are widely used as materials of iron cores used in transformers and the like. In recent years, grain-oriented electrical steel sheets are required to have low iron loss at commercial frequencies and high magnetic flux density at low excitation magnetic fields, for energy saving. In response to these requirements, various studies are conducted to further improve the magnetic properties of grain-oriented electrical steel sheets.

A grain-oriented electrical steel sheet has crystal texture in which the <001> orientation, which is the easy magnetization axis of iron, is highly aligned with the rolling direction of the steel sheet. Such texture is formed through secondary recrystallization of preferentially causing the growth of giant crystal grains in the (110)[001] orientation, which is called Goss orientation, during final annealing in the process of producing the grain-oriented electrical steel sheet. Thus, the crystal orientation of secondary recrystallized grains significantly influences the magnetic properties of the grain-oriented electrical steel sheet.

One method proposed to improve the magnetic properties of grain-oriented electrical steel sheets is to control the cooling process after annealing before final cold rolling to thus control the form of C in steel.

For example, JP S52-094825 A (PTL 1) proposes a technique whereby a steel sheet after annealing is cooled at a cooling rate of 150 °C/min or more in a temperature range of 600 °C to 300 °C to increase solute C.

JP S58-157917 A (PTL 2) proposes a technique whereby a steel sheet after annealing is subjected to quenching and aging treatment under specific conditions to precipitate fine carbides of 100 Å to 500 Å in particle size.

The techniques proposed in PTL 1 and PTL 2 are intended to utilize a phenomenon that a Cottrell atmosphere is created as a result of solute C and the like locking to defects such as dislocations introduced during cold rolling. Such an effect is known as a method of, for general steel, increasing the {110} strength in recrystallized texture during annealing after cold rolling. {110} texture serves as a good nucleus for secondary recrystallization, so that the magnetic properties are improved. Improving texture during recrystallization annealing is a very important factor for grain-oriented electrical steel sheets.

JP S38-014009 B2 (PTL 3) proposes a technique whereby aging treatment is performed after annealing to form lenticular carbides and thus improve texture. Moreover, according to PTL 3, the form of carbon in steel can be controlled using the cooling pattern after hot-rolled sheet annealing.

CITATION LIST

Patent Literature

PTL 1: JP S52-094825 A
PTL 2: JP S58-157917 A
PTL 3: JP S38-014009 B2

SUMMARY

(Technical Problem)

As mentioned above, efforts to improve texture through use of solute C and carbides have been made conventionally. However, the magnetic properties of grain-oriented electrical steel sheets need to be further improved.

It could therefore be helpful to provide a grain-oriented electrical steel sheet having excellent magnetic properties.

(Solution to Problem)

We discovered that the magnetic properties of a grain-oriented electrical steel sheet are improved by, in the process of producing the grain-oriented electrical steel sheet, limiting the aging amount of carbon, i.e., the diffusion distance of carbon, during the aging period from the completion of cooling in annealing before final cold rolling to biting in the final cold rolling to a specific range. The present disclosure is based on this discovery. We thus provide the following.

1. An aging treatment method of subjecting a steel sheet before final cold rolling to aging treatment in a process of producing a grain-oriented electrical steel sheet, wherein a total aging amount of carbon during a period from completion of cooling in annealing before the final cold rolling to biting in the final cold rolling is 0.02 $\mu$m to 0.5 $\mu$m in terms of diffusion distance of carbon.

2. The aging treatment method according to 1., wherein the steel sheet is held at a temperature of 60 °C or lower during at least 95 % of the period, and heated immediately before the biting in the final cold rolling to adjust an aging amount.

3. The aging treatment method according to 1., wherein, regarding an aging amount A from the completion of the cooling in the annealing before the final cold rolling to charging into a final cold mill and an aging amount B from the charging into the final cold mill to the biting, the aging amount B is predicted in advance and the aging amount A is adjusted based on the predicted aging amount B.

4. A method of producing a grain-oriented electrical steel sheet using the aging treatment method according to any one of 1. to 3.

(Advantageous Effect)

It is thus possible to produce a grain-oriented electrical steel sheet having excellent magnetic properties.

DETAILED DESCRIPTION

An embodiment of the present disclosure will be described in detail below. The following description shows a preferred embodiment of the present disclosure, and the present disclosure is not limited by the following description.

In the present disclosure, the magnetic properties of a grain-oriented electrical steel sheet are improved by controlling the degree of aging of C during the period from the completion of cooling in annealing before final cold rolling to biting in the final cold rolling. In the present disclosure, the degree of aging is expressed by the diffusion distance of C, and the diffusion distance of C is defined as "aging amount".

Specifically, in the present disclosure, by limiting the total aging amount of C during the period to 0.5 $\mu$m or less in terms of the diffusion distance of C, it is possible to increase the magnetic flux density of the grain-oriented electrical steel sheet finally obtained. The total aging amount is preferably 0.35 $\mu$m or less. In this way, the condition for obtaining a grain-oriented electrical steel sheet having good properties can be expressed not by time or temperature but by the total aging amount of C. Thus, it is considered that carbon diffusing to sites such as grain boundaries, strain generated during cooling, and other precipitates and influencing texture contributes to improved properties. Accordingly, if the aging amount of C is insufficient, the property-improving effect is insufficient. The aging amount of C is therefore 0.02 $\mu$m or more, and preferably 0.10 $\mu$m or more.

From the viewpoint of such fine control of the aging amount of C, the amount of solute carbon at the time of completion of cooling in annealing before final cold rolling is preferably 50 ppm or more.

In the present disclosure, the method of adjusting the aging amount of carbon during the period is not limited, and any method may be used for the adjustment.

The diffusion distance d (m) of C can be expressed as in the following formula (1) using the diffusion coefficient D ($m^2$/s) of C and the diffusion time t (s). The total diffusion distance during the period from the completion of cooling in annealing before final cold rolling to the start of the final cold rolling is thus calculated by integrating the diffusion distances during the period. Herein, the start of the final cold rolling refers to the time at which the steel sheet is bitten by the rolls of the cold mill that performs the final cold rolling.

$$d = (2Dt)^{1/2} \qquad \dots (1)$$

where D is the diffusion coefficient ($m^2$/s) of C, and t is the diffusion time (s).

The diffusion coefficient D ($m^2$/s) can be determined according to the following formula (2) using the diffusion constant Do ($m^2$/s) of C, the activation energy Q (kJ/mol), the gas constant R ($J \cdot K^{-1} \cdot mol^{-1}$), and the temperature T (K).

$$D = D_0 \exp(-Q/RT) \qquad \dots (2)$$

where:

Do = 1.24 × 10⁻⁵ m²/s

Q = 99.5 × {(1 - 30.9)/T} kJ/mol

R = 8.31446 J.K⁻¹·mol⁻¹.

As can be seen from the formulas (1) and (2), the diffusion distance of carbon during the period depends on the temperature and time during the period. In an actual production environment, however, the temperature of the steel sheet during the period from the completion of cooling in annealing before final cold rolling to biting in the final cold rolling changes constantly. It is therefore desirable to grasp the temperature profile of the steel sheet (coil) during the period and make adjustment accordingly so as to achieve the desired total aging amount.

Examples of the method of adjusting the diffusion distance of C during the period include a method of heating for a certain time before biting and a method of controlling the temperature and time during the waiting time from annealing to rolling.

For example, in one embodiment of the present disclosure, the steel sheet is held at a temperature of 60 °C or lower during at least 95 % of the period, and heated immediately before the biting in the final cold rolling to adjust the aging amount.

As the method of heating before the biting, at least one selected from the group consisting of induction heating, direct resistance heating, and infrared heating is preferably used. With such a heating method, the steel sheet can be heated to the desired temperature in a short time (hereafter, heating by such a method is also referred to as "short-time heating"). The heating conditions are adjusted so that the sum of the diffusion distance during the period before the heating and the diffusion distance due to the heating will be the desired diffusion distance. The diffusion distance during the period before the heating can be calculated based on the temperature profile during the period. Under typical production conditions, after a steel sheet is charged into a mill, the steel sheet comes into contact with rolling oil and as a result undergoes heat input or heat releasing during the period up to biting. Hence, in the case of performing the short-time heating, the heating conditions are determined in consideration of heat transfer between the steel sheet and the rolling oil.

In another embodiment of the present disclosure, regarding the aging amount A from the completion of cooling in annealing before final cold rolling to charging into the final cold mill and the aging amount B from the charging into the final cold mill to biting, the aging amount B is predicted in advance and the aging amount A is adjusted based on the predicted aging amount B.

In detail, in a typical grain-oriented electrical steel sheet production process, a steel sheet after annealing before final cold rolling is once placed in a yard or the like in a coiled state, and subsequently subjected to the final cold rolling. Here, if the temperature prifile from when the steel sheet is charged into the final cold mill to when the steel sheet is bitten is known, the aging amount B from the charging to the biting can be predicted in advance.

Thus, by predicting the aging amount B in advance and adjusting, based on the predicted value, the aging amount A from the completion of cooling in annealing before the final cold rolling to the charging into the final cold mill, the desired total aging amount can be achieved. Although the method of adjusting the aging amount A is not limited, for example, the temperature and time when storing the steel sheet (coil) in a yard or the like before the final cold rolling may be adjusted.

Regarding the temperature information used to calculate the diffusion distance, the temperature of the steel sheet (coil) may be actually measured, or the temperature may be estimated from the environmental temperature and the like. The use of past results to enhance the accuracy of the estimated value is also effective.

Other parts of the production process are not limited, and, for example, a typical grain-oriented electrical steel sheet production process may be employed.

For example, in one embodiment of the present disclosure, a steel slab is prepared and heated, the heated steel slab is hot rolled to obtain a hot-rolled steel sheet, and the hot-rolled steel sheet is subjected to cold rolling at least once. In the case where cold rolling is performed only once, the cold rolling is the "final cold rolling." In the case where cold rolling is performed two or more times, the last cold rolling performed among the two or more cold rolling operations is the "final cold rolling."

[Steel slab]

The steel slab is not limited, and any steel slab may be used. For example, the steel slab can be obtained by a known method such as continuous casting or ingot casting-blooming.

The presently disclosed technique improves magnetic properties by controlling the aging amount as mentioned above, and its effects can be achieved regardless of the chemical composition of the steel slab. Accordingly, a steel slab having any chemical composition can be used. From the viewpoint of further improving magnetic properties, however, it is preferable to use a steel slab having the below-described chemical composition. In this specification, "%" and "ppm" respectively denote "mass%" and "mass ppm" unless otherwise specified.

In one embodiment of the present disclosure, it is preferable to use a steel slab containing C: 0.01 % to 0.10 % and Si: 2.0 % to 4.5 %.

C: 0.01 % to 0.10 %

C is an element useful for improving texture. From the viewpoint of further improving texture, the C content is preferably 0.01 % or more. If the C content in the steel slab is excessively high, decarburization is difficult and C may remain in the grain-oriented electrical steel sheet finally obtained. From the viewpoint of preventing magnetic aging due to residual C and further improving magnetic properties, the C content is preferably 0.10 % or less.

Si: 2.0 % to 4.5 %

Si is an element that has the effect of improving iron loss by increasing electric resistance. From the viewpoint of enhancing the effect achieved by the addition of Si, the Si content is preferably 2.0 % or more. If the Si content is more than 4.5 %, the steel sheet becomes brittle and as a result cold rolling manufacturability decreases. Therefore, from the viewpoint of manufacturability, the Si content is preferably 4.5 % or less.

Mn: 0.02 % to 1.0 %

Mn is an element that has the effect of improving the hot workability of the steel. From the viewpoint of improving hot workability, the Mn content is preferably 0.02 % or more. If the Mn content is excessively high, the magnetic flux density of the grain-oriented electrical steel sheet decreases. Therefore, the Mn content is preferably 1.0 % or less, and more preferably 0.30 % or less.

The present disclosure is applicable both in the case where the steel slab does not contain inhibitor-forming elements (inhibitorless method) and in the case where the steel slab contains inhibitor-forming elements.

As a steel slab not containing inhibitor forming elements, for example, a steel slab having a chemical composition containing (consisting of) C: 0.01 % to 0.10 %, Si: 2.0 % to 4.5 %, and Mn: 0.02 % to 1.0 % with the balance consisting of Fe and inevitable impurities may be used. The contents of inhibitor-forming elements contained in the chemical composition as impurities are preferably Al: less than 0.01 %, N: less than 0.006 %, S: less than 0.005 %, Se: less than 0.005 %, and O: less than 0.005 %.

As a steel slab containing inhibitor forming elements, for example, a steel slab having a chemical composition containing (consisting of) C: 0.01 % to 0.10 %, Si: 2.0 % to 4.5 %, Mn: 0.02 % to 1.0 %, Al: 0.01 % or more and 0,08 % or less, N: 0.006 % or more and 0,015 % or less, S: 0.005 % or more and 0.05 % or less, Se: 0.005 % or more and 0.05 % or less, and O: less than 0.005 % with the balance consisting of Fe and inevitable impurities may be used.

In order to further improve magnetic properties, the steel slab may optionally contain at least one selected from the group consisting of

B : 0.5 ppm to 1.0 %,
Bi: 0.5 ppm to 1.0 %,
Sb: 5 ppm to 1.0 %,
Mo: 5 ppm to 1.0 %,
Te: 5 ppm to 1.0 %,
Sn: 5 ppm to 1.0 %,
P : 5 ppm to 1.0 %,
Ge: 5 ppm to 1.0 %,
As: 5 ppm to 1.0 %,
Nb: 5 ppm to 1.0 %,
Cr: 5 ppm to 1.0 %,
Ti: 5 ppm to 1.0 %,
Cu: 5 ppm to 1.0 %,
Pb: 5 ppm to 1.0 %,
Zn: 5 ppm to 1.0 %, and
In: 5 ppm to 1.0 %.

[Slab heating]

Next, the steel slab is heated prior to hot rolling. The heating temperature (slab heating temperature) in the heating step is not limited. If the slab heating temperature is excessively low, however, hot rolling is difficult. The slab heating temperature is therefore preferably 1050 °C or higher, from the viewpoint of performing hot rolling smoothly. If the slab heating temperature is excessively high, the steel slab melts. Accordingly, the slab heating temperature is set to be not higher than the melting point of the steel slab. Typically, the slab heating temperature is preferably 1400 °C or lower.

In the case of using a steel slab containing inhibitor-forming elements, it is desirable to completely dissolve the inhibitor-forming elements contained in the steel slab by heating. Therefore, the slab heating temperature is more preferably 1300 °C or higher.

In the case of using a steel slab not containing inhibitor-forming elements, high-temperature heating is unnecessary because there is no need to dissolve inhibitor-forming elements. Therefore, the slab heating temperature is more preferably 1050 °C to 1250 °C.

[Hot rolling]

The heated steel slab is then hot rolled to obtain a hot-rolled steel sheet, and the hot-rolled steel sheet is subjected to cold rolling at least once. The hot rolling is not limited and may be performed under any conditions.

[Annealing]

In the case where cold rolling is performed only once, annealing is performed before the cold rolling. That is, the steel slab is hot rolled into a hot-rolled steel sheet, and the hot-rolled steel sheet is annealed. Such annealing performed on the hot-rolled steel sheet prior to cold rolling is referred to as "hot-rolled sheet annealing" in this technical field. After the hot-rolled sheet annealing, aging treatment is performed before cold rolling.

In the case where cold rolling is performed a plurality of times, it is preferable to perform annealing between each two successive cold rolling operations. Such annealing performed between cold rolling operations is referred to as "intermediate annealing" in this technical field. After annealing (final intermediate annealing) before the last cold rolling operation (final cold rolling) of the plurality of cold rolling operations, aging treatment is performed before the final cold rolling. In the case where cold rolling is performed a plurality of times, too, it is preferable to, after the hot rolling, perform annealing (hot-rolled sheet annealing) on the hot-rolled steel sheet before the first cold rolling operation.

[Cold rolling]

After the aging treatment is performed as described above, cold rolling is performed. The conditions of the aging treatment are as described above. The cold rolling is not limited and may be performed under any conditions. However, if the total rolling reduction ratio in the cold rolling is less than 80 %, (111) fiber texture (i.e., γ fiber) required for secondary recrystallization is insufficient. If the total rolling reduction ratio is more than 94 %, the effect of improving texture by annealing the hot-rolled steel sheet a plurality of times cannot be achieved. This is because the {110}<001> orientation, which serves as a nucleus for secondary recrystallization, decreases. Therefore, the total rolling reduction ratio in the cold rolling is preferably 80 % to 94 % and more preferably 82 % to 91 %, from the viewpoint of further improving magnetic properties through texture control.

The process after the cold rolling will be described next. In one embodiment of the present disclosure, for example, the steel sheet after the cold rolling is subjected to primary recrystallization annealing, an annealing separator is applied to the surface of the steel sheet, and then the steel sheet is subjected to secondary recrystallization annealing to obtain a grain-oriented electrical steel sheet.

The annealing separator is not limited and any annealing separator may be used. For example, it is preferable to use an annealing separator containing at least one of magnesia, silica, and alumina, and more preferable to use an annealing separator containing at least one of magnesia, silica, and alumina as a main component.

In the case where the annealing separator contains magnesia, in the subsequent secondary recrystallization annealing step, $SiO_2$ present on the surface of the steel sheet reacts with magnesia (MgO) to form a forsterite ($Mg_2SiO_4$) film. From the viewpoint of magnetic properties, it is preferable to use an annealing separator containing magnesia to form a forsterite film in secondary recrystallization annealing.

In the case where an annealing separator not containing magnesia is used, on the other hand, no forsterite film is formed. From the viewpoint of improving the blanking workability of the grain-oriented electrical steel sheet, it is preferable to use an annealing separator not containing magnesia.

After the application of the annealing separator, secondary recrystallization annealing is performed. The secondary recrystallization annealing is not limited and may be performed according to a conventional method.

After the secondary recrystallization annealing, an insulating coating may be formed. The formation of the insulating coating can reduce iron loss when grain-oriented electrical steel sheets are stacked and used. The insulating coating may be formed according to a conventional method. For example, a coating solution containing phosphate may be applied to the surface of the steel sheet and then baked to form an insulating coating. The coating solution preferably contains phosphate and colloidal silica, and more preferably contains phosphate, colloidal silica, and chromic acid.

Moreover, after the secondary recrystallization annealing, flattening annealing may be performed to adjust the shape of the steel sheet. In the case where the insulating coating is formed, the flattening annealing can also serve to bake the insulating coating.

EXAMPLES

(Example 1)

Steel slabs having a chemical composition containing C: 0.035 %, Si: 3.4 %, Mn: 0.07 %, Al: 0.006 %, N: 0.005 %, S: 0.003 %, Se: 0.001 %, Sb: 0.03 %, and O: 0.001 % with the balance consisting of Fe and inevitable impurities were prepared. Each steel slab was heated and then hot rolled to obtain a hot-rolled sheet with a thickness of 2.2 mm.

The hot-rolled sheet was then subjected to hot-rolled sheet annealing to obtain a hot-rolled and annealed sheet. In the hot-rolled sheet annealing, first the hot-rolled sheet was soaked at 1030 °C for 30 seconds, and then mist-cooled at 30 °C/s from 900 °C to 100 °C. In this example, the hot-rolled sheet annealing is annealing before final cold rolling.

The hot-rolled and annealed sheet after the mist cooling was pickled under the conditions shown in Table 1. Solute carbon after the mist cooling was 80 ppm.

The steel sheet after the pickling was subjected to final cold rolling to obtain a cold-rolled steel sheet with a final thickness of 0.20 mm. The temperature profile from the pickling to the biting in the final cold rolling was as shown in Table 1.

In some examples, short-time heating was performed under the conditions shown in Table 1 before the biting in the final cold rolling. The short-time heating was carried out by induction heating. In each example, the heat input due to contact with rolling oil was as shown in Table 1.

The total aging amount (in terms of the diffusion distance of carbon) calculated from the temperature profile using the foregoing formulas (1) and (2) is shown in Table 1.

In Example No. 5, the aging amount B from the charging into the final cold mill to the biting was calculated in advance from the conditions of heat input to the steel sheet due to contact with rolling oil, and the aging amount A from the completion of cooling in annealing before the final cold rolling to the charging into the final cold mill was adjusted based on the aging amount B so that the total aging amount would be the value shown in Table 1.

Subsequently, the cold-rolled steel sheet was subjected to primary recrystallization annealing at a soaking temperature of 800 °C for a soaking time of 30 seconds. An annealing separator containing MgO: 95 % and $TiO_2$: 5 % was then applied to the surface of the steel sheet as water slurry and dried, and the steel sheet was subjected to secondary recrystallization annealing (final annealing). A coating solution containing phosphate-chromate-colloidal silica at a weight ratio of 3:1:3 was applied to the surface of the resultant final annealed sheet, and baked at 800 °C.

The magnetic properties of the width center part of the resultant grain-oriented electrical steel sheet were examined. Specifically, after performing stress relief annealing at 800 °C for 3 hours, the magnetic flux density $B_8$ upon excitation at 800 A/m was measured.

[Table 1]

Table 1

| No. | Conditions (temperature profile) | | | | | | Total aging amount (μm) | Magnetic flux density $B_8$ (T) | Remarks |
|---|---|---|---|---|---|---|---|---|---|
| | Pickling | Retention in yard before rolling | Rolling entry-side looper | Proportion of time during which steel sheet was held at 60 °C or lower (%) | Conditions of heating immediately before rolling | | | | |
| | | | | | Short-time heating before biting | Heat input due to contact with rolling oil | | | |
| 1 | 80 °C × 3 min | 70 °C × 200 hr | 50 °C × 5 min | 0.04 | - | 60 °C × 10 sec | 0.55 | 1.90 | Comparative Example |
| 2 | 80 °C × 3 min | 40 °C × 200 hr | 50 °C × 5 min | 99.98 | 90 °C × 2 see | 60 °C × 10 sec | 0.20 | 1.93 | Example |
| 3 | 80 °C × 3 min | 50 °C × 200 hr | 50 °C × 5 min | 99.98 | 100 °C × 2 see | 60 °C × 10 sec | 0.30 | 1.92 | Example |
| 4 | 80 °C × 3 min | 50 °C × 200 hr | 50 °C × 5 min | 99.98 | 97 °C × 2 see | 60 °C × 10 sec | 0.20 | 1.93 | Example |
| 5 | 80 °C × 3 min | 45 °C × 220 hr | 50 °C × 5 min | 99.98 | - | 60 °C × 10 sec | 0.20 | 1.93 | Example |
| 6 | 80 °C × 3 min | 60 °C × 345 hr | 50 °C × 5 min | 99.99 | 100 °C × 2 see | 60 °C × 10 sec | 0.50 | 1.91 | Example |
| 7 | 80 °C × 3 min | 60 °C × 200 hr | 50 °C × 5 min | 99.98 | 100 °C × 2 see | 60 °C × 10 sec | 0.40 | 1.92 | Example |
| 8 | 80 °C × 3 min | 50 °C × 30 hr | 55 °C × 5 min | 99.83 | 30 °C × 2 see | 30 °C × 10 sec | 0.10 | 1.92 | Example |
| 9 | 80 °C × 3 min | 10 °C × 4 hr | 10 °C × 5 min | 98.79 | 30 °C × 2 see | 20 °C × 10 sec | 0.02 | 1.91 | Example |
| 10 | 60 °C × 3 min | 10 °C × 2 hr | 10 °C × 5 min | 100.00 | 10 °C × 2 see | 10 °C × 10 sec | 0.01 | 1.89 | Comparative Example |

**EP 4 414 464 A1**

(Example 2)

Steel slabs having chemical compositions containing the components shown in Table 2 with the balance consisting of Fe and inevitable impurities were prepared. Each steel slab was heated and then hot rolled to obtain a hot-rolled sheet with a thickness of 2.5 mm. The hot-rolled sheet was then subjected to hot-rolled sheet annealing. In the hot-rolled sheet annealing, the hot-rolled sheet was soaked at 1000 °C for 30 seconds, and then cooled at 10 °C/s from 900 °C to 100 °C. The hot-rolled and annealed sheet was then pickled at 80 °C for 3 minutes. The steel sheet was then cold rolled to a thickness of 1.5 mm, then subjected to intermediate annealing of soaking at 1050 °C for 1 minute, and then cooled at 50 °C/s from 900 °C to 100 °C. In this example, the intermediate annealing is annealing before final cold rolling. Solute carbon after the intermediate annealing and cooling was 150 ppm.

After this, the aging amount was adjusted by heating immediately before biting (actually, heating: 105 °C $\times$ 2 seconds and heat input due to contact with rolling oil: 55 °C $\times$ 5 seconds) depending on the aging amount in the rolling entry-side looper so that the total aging amount would be 0.25 $\mu$m, and the steel sheet was bitten in cold rolling. A cold-rolled steel sheet with a final thickness of 0.18 mm was thus obtained.

Subsequently, the cold-rolled steel sheet was subjected to primary recrystallization annealing at a soaking temperature of 800 °C for a soaking time of 30 seconds. An annealing separator containing MgO: 95 % and $TiO_2$: 5 % was then applied to the surface of the steel sheet as water slurry and dried, and the steel sheet was subjected to secondary recrystallization annealing (final annealing). A coating solution containing phosphate-chromate-colloidal silica at a weight ratio of 3:1:3 was applied to the surface of the resultant final annealed sheet, and baked at 800 °C.

The magnetic properties of the width center part of the resultant grain-oriented electrical steel sheet were examined. Specifically, after performing stress relief annealing at 800 °C for 3 hours, the magnetic flux density $B_8$ upon excitation at 800 A/m was measured.

As can be seen from the results of Examples 1 and 2, in each example in which aging treatment satisfying the conditions according to the present disclosure was performed, a grain-oriented electrical steel sheet having high magnetic flux density was obtained.

[Table 2]

Table 2

| No. | Chemical composition | | | | | | | | | Total aging amount (μm) | Magnetic flux density B₈ (T) | Remarks |
|---|---|---|---|---|---|---|---|---|---|---|---|---|
| | C (%) | Si (%) | Mn (%) | Al (%) | N (%) | S (%) | Se (%) | O (ppm) | Others | | | |
| 11 | 0.035 | 3.4 | 0.07 | 0.005 | 0.005 | 0.002 | 0.003 | 20 | | 0.25 | 1.92 | Example |
| 12 | 0.035 | 3.4 | 0.07 | 0.027 | 0.008 | 0.002 | 0.001 | 20 | | 0.25 | 1.92 | Example |
| 13 | 0.035 | 3.4 | 0.07 | 0.005 | 0.005 | 0.002 | 0.003 | 20 | B = 0.001 %, Bi = 0.002 %, Sb = 0.02 % | 0.25 | 1.93 | Example |
| 14 | 0.035 | 3.4 | 0.07 | 0.005 | 0.005 | 0.002 | 0.003 | 20 | Mo = 0.02 %, Te = 0.01 %, Sn = 0.02 % | 0.25 | 1.93 | Example |
| 15 | 0.035 | 3.4 | 0.07 | 0.005 | 0.005 | 0.002 | 0.003 | 20 | P = 0.01 %, Ge = 0.01 %, As = 0.01 % | 0.25 | 1.93 | Example |
| 16 | 0.035 | 3.4 | 0.07 | 0.027 | 0.008 | 0.002 | 0.001 | 20 | Nb = 0.005 %, Cr = 0.01 %, Ti = 0.01 % | 0.25 | 1.93 | Example |
| 17 | 0.035 | 3.4 | 0.07 | 0.027 | 0.008 | 0.002 | 0.001 | 20 | Cu = 0.01 %, Pb = 0.005 %, Zn = 0.001 %, In = 0.001 % | 0.25 | 1.93 | Example |

**Claims**

1.  An aging treatment method of subjecting a steel sheet before final cold rolling to aging treatment in a process of producing a grain-oriented electrical steel sheet,
    wherein a total aging amount of carbon during a period from completion of cooling in annealing before the final cold rolling to biting in the final cold rolling is 0.02 $\mu$m to 0.5 $\mu$m in terms of diffusion distance of carbon.

2.  The aging treatment method according to claim 1, wherein the steel sheet is held at a temperature of 60 °C or lower during at least 95 % of the period, and heated immediately before the biting in the final cold rolling to adjust an aging amount.

3.  The aging treatment method according to claim 1, wherein, regarding an aging amount A from the completion of the cooling in the annealing before the final cold rolling to charging into a final cold mill and an aging amount B from the charging into the final cold mill to the biting, the aging amount B is predicted in advance and the aging amount A is adjusted based on the predicted aging amount B.

4.  A method of producing a grain-oriented electrical steel sheet using the aging treatment method according to any one of claims 1 to 3.

## INTERNATIONAL SEARCH REPORT

| International application No. |
| --- |
| **PCT/JP2022/038469** |

### A. CLASSIFICATION OF SUBJECT MATTER

*C21D 8/12*(2006.01)i; *C22C 38/00*(2006.01)n; *C22C 38/60*(2006.01)n; *H01F 1/147*(2006.01)i
FI: C21D8/12 B; H01F1/147 175; C22C38/00 303U; C22C38/60

According to International Patent Classification (IPC) or to both national classification and IPC

### B. FIELDS SEARCHED

Minimum documentation searched (classification system followed by classification symbols)

C21D8/12; C21D9/46; C22C38/00-C22C38/60; H01F1/147

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| X | JP 2003-253335 A (JFE STEEL KK) 10 September 2003 (2003-09-10) claims, paragraphs [0011], [0015]-[0020], [0029], [0034]-[0041], examples 1-3, tables 2-4 | 1-2, 4 |
| A | | 3 |
| A | JP 2005-279689 A (JFE STEEL KK) 13 October 2005 (2005-10-13) claims, paragraphs [0023]-[0031], table 1, fig. 1 | 1-4 |
| A | JP 1-215925 A (NIPPON STEEL CORP.) 29 August 1989 (1989-08-29) claims, page 2, upper right column, line 3 to lower left column, line 8, fig. 2 | 1-4 |
| A | JP 2011-52302 A (JFE STEEL KK) 17 March 2011 (2011-03-17) paragraphs [0001], [0007], [0016], [0040] | 1-4 |
| A | JP 6-172861 A (NIPPON STEEL CORP.) 21 June 1994 (1994-06-21) entire text, all drawings | 1-4 |
| A | CN 1978673 A (BAOSHAN IRON AND STEEL CO., LTD.) 13 June 2007 (2007-06-13) entire text | 1-4 |

☐ Further documents are listed in the continuation of Box C.  ☑ See patent family annex.

| | |
| --- | --- |
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| **14 December 2022** | **27 December 2022** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

## INTERNATIONAL SEARCH REPORT
### Information on patent family members

| International application No. |
|---|
| **PCT/JP2022/038469** |

| Patent document cited in search report | | | Publication date (day/month/year) | Patent family member(s) | Publication date (day/month/year) |
|---|---|---|---|---|---|
| JP | 2003-253335 | A | 10 September 2003 | (Family: none) | |
| JP | 2005-279689 | A | 13 October 2005 | (Family: none) | |
| JP | 1-215925 | A | 29 August 1989 | (Family: none) | |
| JP | 2011-52302 | A | 17 March 2011 | (Family: none) | |
| JP | 6-172861 | A | 21 June 1994 | (Family: none) | |
| CN | 1978673 | A | 13 June 2007 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP S52094825 A
- JP S58157917 A
- JP S38014009 B